# EUROPEAN PATENT APPLICATION

(11) **EP 4 488 113 A1**
(43) Date of publication of application: **08.01.2025**
(21) Application number: 24180111.7
(22) Date of filing: 05.06.2024
(51) Int. Cl.: B60N 2/56, B60N 3/06

(54) **VEHICLE SEAT**

(30) Priority: 07.07.2023 JP 2023112084
(71) Applicant: Suzuki Motor Corporation, Shizuoka 432-8611 (JP)
(72) Inventor: YANAGIHARA, Natsuki, HAMAMATSU-SHI, 432-8611 (JP)
(74) Representative: Plasseraud IP

(57) **Abstract**

[Problem to be Solved] A vehicle seat is provided that can easily warm the feet of an occupant even if goods, such as shoes, are placed in a foot space behind the seat.

[Solution] A vehicle seat 1 includes: a seat cushion 3 in which an occupant is seated; a seat back 5 that is disposed upward from a rear part of the seat cushion 3, and supports an upper body of the occupant seated in the seat cushion 3; a footrest FR that is formed at at least one of the seat cushion 3 and the seat back 5, and is configured to allow feet of an occupant positioned behind the seat cushion 3 to be placed; and a cushion heater (heat generating portion) 33 that heats the footrest FR and/or therearound.

## Description

### [Technical Field]

The present invention relates to a vehicle seat.

### [Background Art]

Typically, in a vehicle, such as an automobile, warm air heated by an air conditioner can be blown toward the feet of an occupant seated in a seat. The warm air that is blown is easily diffused because the medium for transferring heat is air (a gas). Accordingly, there is a limitation to efficiently warming the feet. In particular, in a case of warming the feet of an occupant seated in a rear seat of a vehicle, a duct and the like are required for drawing air toward the rear from the air conditioner provided in an instrument panel disposed forward of front seats, and thus the length of the flow path of the duct is long. Consequently, heat is prone to be dissipated before the warm air reaches the feet.

Accordingly, for example, Patent Literature 1 discloses a foot heater for an occupant in a rear seat. The foot heater is provided with a footrest that is switchable between a use mode of being lowered toward the floor and a stored mode of being raised toward the bottom of the seat cushion, below the seat cushion of a front seat. The footrest is provided with a planar heat generator that can wrap feet placed on the footrest from above and below, and is turned off when the footrest is stored, and is turned on when the footrest is used.

### [Citation List]

### [Patent Literature]

[Patent Literature 1] JP H02-149307 U

### [Summary of Invention]

### [Problems to be Solved by the Invention]

Incidentally, for example, in a scene in which people go to a skiing site by a vehicle, such as an automobile, enjoy skiing outdoors, and subsequently take off ski boots, there is a need to warm the feet, particularly the toes. However, according to the structure of the foot heater as disclosed in Patent Literature 1 described above, in a case in which shoes are taken off in a cabin and then the footrest is used, the footrest and the shoes taken off interfere with each other, the footrest cannot be switched to the position for using the footrest, use of the foot heater is possibly affected, and there is room for improvement.

The present invention has been made in view of the above-described point, and has an object to provide a vehicle seat that can easily warm the feet of an occupant even when goods, such as shoes, are placed in a foot space behind the seat.

### [Means for Solving the Problems]

One aspect of the present invention to achieve the above object provides a vehicle seat that includes: a seat cushion on which an occupant is to be seated; and a seat back that is disposed upward from a rear part of the seat cushion, and supports the upper body of the occupant seated in the seat cushion. The vehicle seat further includes: a footrest that is formed at at least one of the seat cushion and the seat back, and is configured to allow the feet of an occupant positioned behind the seat cushion to be placed; and a heat generating portion that heats the footrest and/or therearound.

### [Advantageous Effect of Invention]

According to the one aspect of the vehicle seat according to the present invention, the feet of the occupant can be easily warmed even if goods, such as shoes, are placed in a foot space behind the seat.

### [Brief Description of Drawings]

[Figure 1] Figure 1 is a perspective view showing an appearance of a seat cushion of a vehicle seat according to a first embodiment of the present invention.
[Figure 2] Figure 2 is an exploded perspective view showing the configuration of the seat cushion in Figure 1.
[Figure 3] Figure 3 is a sectional view taken along the line A-A in Figure 1.
[Figure 4] Figure 4 is a sectional view of a footrest and therearound in Figure 3 in an enlarged scale.
[Figure 5] Figure 5 shows an example of a posture and the like of an occupant placing the feet on the footrest according to the first embodiment viewed from a side of a vehicle.
[Figure 6] Figure 6 is a sectional view showing the footrest and therearound according to Modification Example 1-1 related to the first embodiment in an enlarged scale.
[Figure 7] Figure 7 is a plan view showing the configuration of a cushion heater according to Modification Example 1-2.
[Figure 8] Figure 8 is a sectional view of a footrest and therearound according to Modification Example 1-3 in an enlarged scale.
[Figure 9] Figure 9 is a sectional view of a footrest and therearound according to Modification Example 1-4 in an enlarged scale.
[Figure 10] Figure 10 is a perspective view showing a schematic configuration of a seat cushion according to Modification Example 1-5.
[Figure 11] Figure 11 is a sectional view of a footrest and therearound according to Modification Example 1-6 in an enlarged scale.
[Figure 12] Figure 12 is a sectional view of a footrest and therearound according to Modification Example 1-7 in an enlarged scale.
[Figure 13] Figure 13 is a sectional view showing a footrest of a vehicle seat and therearound according to a second embodiment of the present invention in an enlarged scale.
[Figure 14] Figure 14 is a side sectional view showing a main configuration of a vehicle seat according to a third embodiment of the present invention.
[Figure 15] Figure 15 is a side sectional view showing a main configuration according to Modification Example 3-1 related to the third embodiment.
[Figure 16] Figure 16 is a side sectional view showing a main configuration according to Modification Example 3-2.
[Figure 17] Figure 17 is a side sectional view showing a main configuration according to Modification Example 3-3.

### [Mode for Carrying Out the Invention]

### First Embodiment

Hereinafter, embodiments of the present invention will be described in detail with reference to the accompanying drawings.

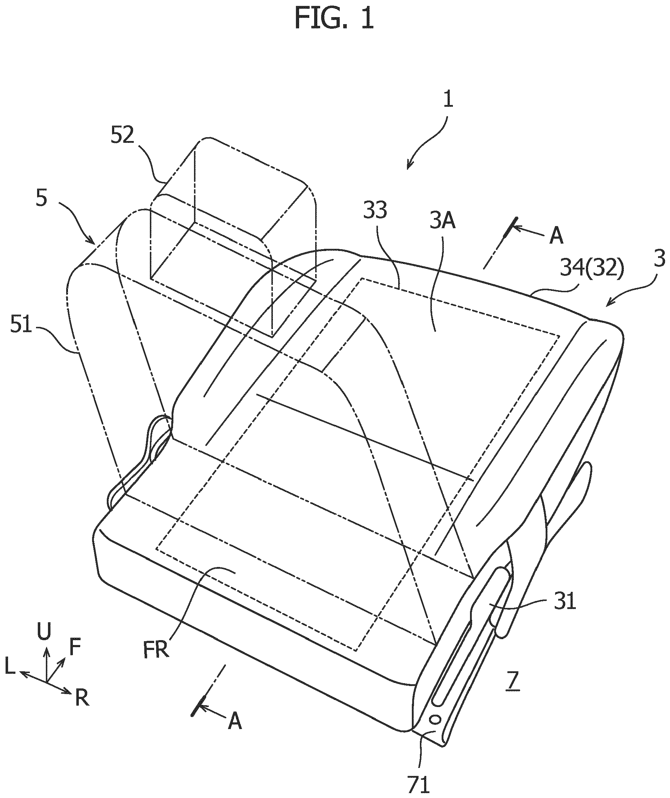

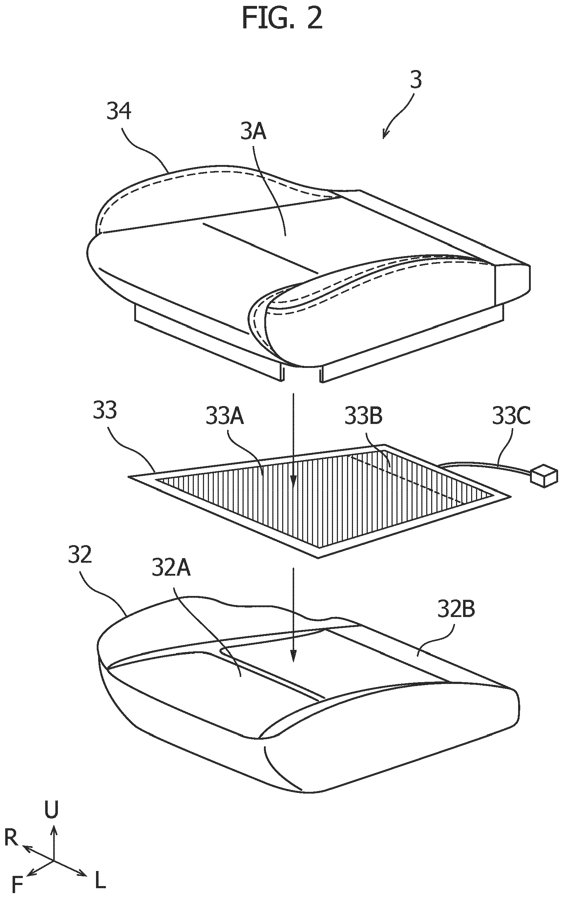

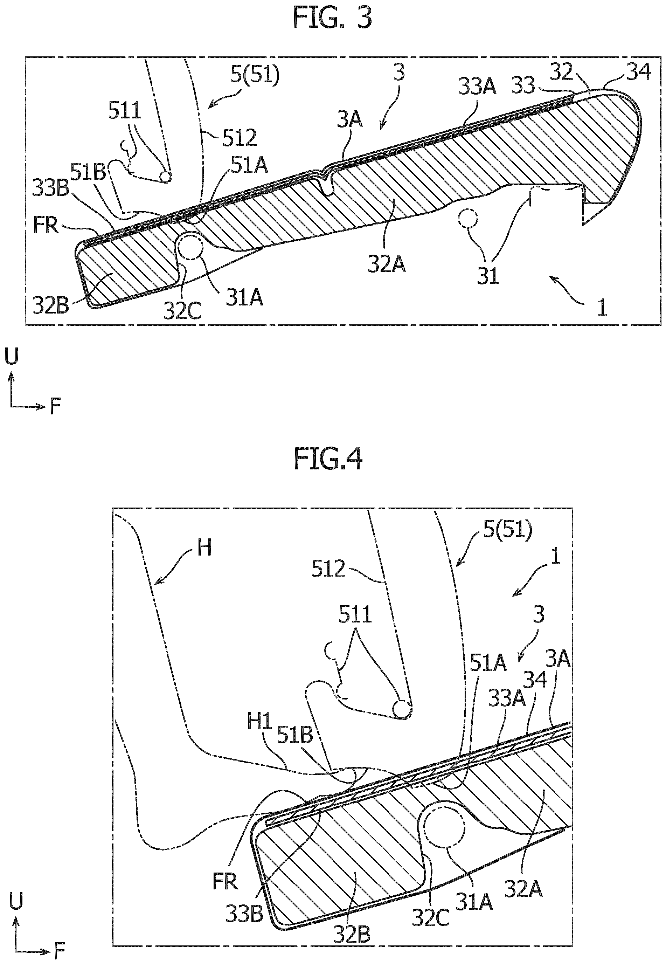

Figure 1 is a perspective view showing an appearance of a seat cushion of a vehicle seat according to a first embodiment of the present invention. Figure 2 is an exploded perspective view showing the configuration of the seat cushion in Figure 1. Figure 3 is a sectional view taken along the line A-A in Figure 1. Note that, in the drawings described below, an arrow F direction indicates the front in the front-rear direction of the vehicle seat. The "front part (front end) and rear part (rear end)" in the description of each embodiment respectively correspond to the front and the rear in the seat front-rear direction. The front of the seat front-rear direction described in each embodiment corresponds to the front in the vehicle front-rear direction. The direction of arrow R and the direction of arrow L respectively indicate the right side and the left side when an occupant sits on a vehicle seat. The direction of arrow U indicates upward in the vertical direction at the vehicle seat.

In Figures 1 to 3, the vehicle seat 1 according to the first embodiment includes a seat cushion 3 (solid lines), and a seat back 5 (two-dot chain lines). The seat cushion 3 is a portion on which an occupant is seated. The seat back 5 is disposed upward from a rear part of the seat cushion 3, and supports the upper body of the occupant (not shown) seated on the seat cushion 3.

The seat cushion 3 includes a cushion frame 31, a cushion material 32 arranged on the upper part of the cushion frame 31, a cushion heater 33 laid on an upper surface of the cushion material 32, and a cushion cover 34 that covers the cushion material 32 and the cushion heater 33. In the first embodiment, the cushion heater 33 corresponds to "heat generating portion" in the present invention.

The cushion frame 31 constitutes a framework of the seat cushion 3. A lower portion of the cushion frame 31 has parts on both sides in the seat width direction movably attached to left and right seat rails 71 via traveling portions (not shown) (Figure 1). The seat rails 71 are provided on a vehicle floor 7 in a vehicle cabin, and extend in the vehicle front-rear direction.

The cushion material 32 has elastic properties, and serves as a base that forms a seat surface 3A of the seat cushion 3. The cushion material 32 in the first embodiment includes an extending portion 32B that extends rearward beyond a lower surface 51A of a main body portion 51, mentioned below, of the seat back 5 in an upright state (Figures 1 and 3). The extending portion 32B extends in the width direction of the seat cushion 3 (left-right direction), with a predetermined extending length and a predetermined thickness in the vertical direction. That is, in the cushion material 32, a sitting portion 32A that serves as a base for forming the sitting surface 3A of the seat cushion 3, and the extending portion 32B that continuously extends rearward from the rear end of the sitting portion 32A are integrally formed.

The lower surface 51A of the main body portion 51 of the seat back 5 is pressed against the upper part of the rear end of the sitting portion 32A of the cushion material 32, via the cushion heater 33 and the cushion cover 34 (Figure 3). A concave 32C corresponding to a cross frame 31A constituting part of the cushion frame 31 is provided in a lower part of the rear end of the sitting portion 32A. The concave 32C extends in the left-right direction (seat vehicle width direction) along the cross frame 31A, and is open downward. Thus, the extending portion 32B is formed rearward of the concave 32C.

The cushion heater 33 is spread in the front-rear direction and the left-right direction so as to cover each of upper surfaces of the sitting portion 32A and the extending portion 32B of the cushion material 32 (Figures 1 to 3). In the cushion heater 33, a heat generator made of heater wiring or the like is installed. A hatched portion in Figure 2 indicates an installation range of the heat generator. In the first embodiment, for example, a sitting surface heat generator 33A and a footrest heat generator 33B are integrally formed as heat generating portions of the cushion heater 33.

The sitting surface heat generator 33A is disposed around the sitting surface 3A of the seat cushion 3. Specifically, the sitting surface heat generator 33A is disposed in a range from the front portion of the upper surface of the sitting portion 32A of the cushion material 32 to the vicinity of the pressed contact site with the lower surface 51A of the main body portion 51 of the seat back 5, in the front-rear direction. The footrest heat generator 33B extends rearward to the rear portion of the upper surface of the extending portion 32B of the cushion material 32 from the rear end part of the sitting surface heat generator 33A. The sitting surface heat generator 33A and the footrest heat generator 33B are electrically connected to each other, and power from a vehicle-mounted battery (not shown) is supplied to the cushion heater 33 via electric connector wiring 33C, thus heating the vicinity.

The cushion cover 34 is a trim that covers the cushion material 32 and the cushion heater 33 from above (Figure 2). The cushion cover 34 covers the upper part, front part, rear part, and parts on both the left and right sides of the cushion material 32. That is, the seat cushion 3 has a configuration in which the cushion heater 33 is provided at a predetermined position intervening between the cushion material 32 and the cushion cover 34.

The seat back 5 includes: the aforementioned main body portion 51 that supports the back of the occupant seated in the seat cushion 3; and the headrest 52 that supports the head of the occupant (Figure 1). The headrest 52 is detachably attached to the main body portion 51. The main body portion 51 includes a back frame 511 that constitutes the framework of the main body portion 51, and a back cushion 512 that covers the back frame 511 (Figure 3). The back cushion 512 is covered with a back cover (not shown). The inclination angle of the seat back 5 from the seat cushion 3 can be adjusted by a reclining mechanism (not shown). The rear portion of the lower surface 51A of the main body portion 51 of the seat back 5 in the upright state has a shape curved upward toward the rear, and is formed with a clearance 51B that is open rearward between the lower surface 51A and the upper surface of the seat cushion 3 (Figure 3).

In the vehicle seat 1 of the first embodiment including the seat cushion 3 and the seat back 5 as described above, a portion that is of the upper surface (cushion cover 34) of the seat cushion 3 and corresponds to the extending portion 32B of the cushion material 32 functions as a footrest FR configured to allow the feet of an occupant positioned rearward of the seat cushion 3 to be placed thereon. The occupant positioned rearward of the seat cushion 3 is, for example, an occupant (an occupant seated in the rear seat) different from an occupant seated in the seat cushion 3, or indicates a case in which the occupant seated in the seat cushion 3 moves to the rear seat, and places the feet on the footrest FR. The footrest FR is heated by the footrest heat generator 33B of the cushion heater 33, thus warming the feet of the occupant placed on the footrest FR.

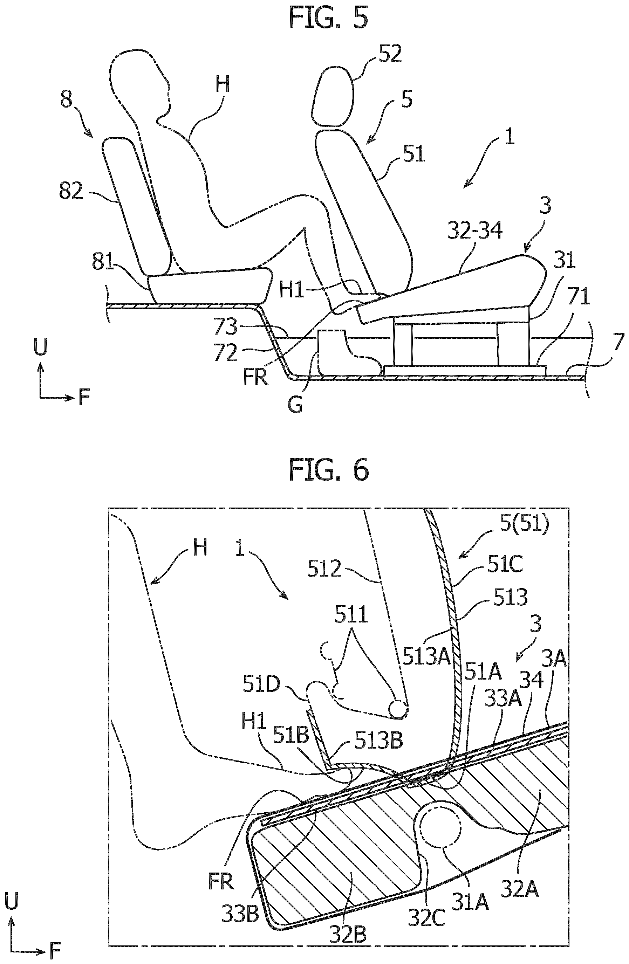

Figure 4 is a sectional view of the footrest FR and therearound in Figure 3 in an enlarged scale. Figure 5 shows an example of the posture and the like of an occupant H placing the feet H1 on the footrest FR according to the first embodiment viewed from a side of the vehicle. In the example in Figure 5, in the vehicle in which seats are arranged in two rows, a front row and a back row, the vehicle seat 1 of the first embodiment is applied to each front seat. Note that the vehicle seat 1 may be applied not only to the front seats in the two-front-and-rear-row seat arrangement, but also to seats (e.g., the first and/or second seats in a three-front-and-rear-row seat arrangement) behind which seats are arranged.

In the vehicle as shown in Figure 5, the occupant H seated on a seat cushion 81 and a seat back 82 of a rear seat 8 can warm the feet H1 by allowing the feet H1 with shoes taken off to be placed on the footrest FR in a state in which the cushion heater 33 provided in the front vehicle seat 1 is in operation. In particular, as shown in Figure 4, if feet H1 are placed on the footrest FR so that toes can be inserted into the clearance 51B formed between the front portion of the footrest FR and the lower surface 51A of the main body portion 51 of the seat back 5, the toes can be efficiently warmed.

In this case, the footrest FR of the vehicle seat 1 is at a position higher than the lower surface of the seat cushion 3 of the front seat. Accordingly, even when goods G, such as shoes, are taken off and are placed in the foot space for the rear seat 8, the occupant H can place the feet H1 securely in contact with the footrest FR, and the contact state can be easily maintained (Figure 5). In the vehicle seat 1 of the first embodiment, the extending portion 32B of the cushion material 32 of the seat cushion 3, which serves as the base of the footrest FR, is configured so as to extend rearward beyond the lower surface 51A of the main body portion 51 of the seat back 5 in the upright state. According to such a configuration, the space of the footrest FR can be secured rearward of the sitting surface 3A, while the area and the cushioning properties of the sitting surface 3A of the seat cushion 3 of the front seat are maintained in a desired state.

Furthermore, according to the first embodiment, the rear end portion of the seat cushion 3 corresponding to the extending portion 32B of the cushion material 32 is disposed at a distance upward from the vehicle floor 7 (Figure 5). According to such a disposition, the goods G, such as shoes, placed in the foot space of the rear seat 8, are resistant to interference with the footrest FR of the front seat. Accordingly, the occupant H in the rear seat 8 can easily use the footrest FR. In particular, in the case of the vehicle body structure that includes a floor kick-up portion 72 made of a portion of the vehicle floor 7 below the rear seat that is raised upward as exemplified in Figure 5, the goods G, such as shoes, cannot be moved below the rear seat. Accordingly, the space below the footrest FR of the front seat is effectively usable. In a case in which a floor tunnel 73 formed at the center of the vehicle floor 7 in the vehicle width direction extends rearward to the foot side at the rear seat 8, the goods G, such as shoes, cannot be moved to the center of the vehicle floor 7 in the vehicle width direction. Accordingly, the space below the footrest FR of the front seat can be effectively usable.

In addition, in the vehicle seat 1 according to the first embodiment, the sitting surface heat generator 33A and the footrest heat generator 33B are included in the common cushion heater 33. Through use of such a cushion heater 33, both the sitting surface 3A of the seat cushion 3 and the footrest FR can be heated with a simple configuration.

### Modification Example 1-1

Here, various modification examples related to the aforementioned first embodiment will be described.

Figure 6 is a sectional view of a footrest FR and therearound in Modification Example 1-1 in an enlarged scale. Note that components identical or corresponding to those of the first embodiment are assigned the same symbols. This also applies below.

In the aforementioned first embodiment, an example in which the footrest FR is heated by the footrest heat generator 33B of the cushion heater 33 provided in the seat cushion 3 is described. In addition, in Modification Example 1-1, as shown in Figure 6, a configuration is adopted in which the footrest FR and therearound are heated by a footrest heat generator 513B of a back heater 513 provided in the main body portion 51 of the seat back 5, in addition to the footrest heat generator 33B of the cushion heater 33 in the first embodiment. Consequently, in Modification Example 1-1, the cushion heater 33 and the back heater 513 correspond to "heat generating portion" of the present invention.

The back heater 513 is spread so as to continuously cover the backrest surface (front surface) 51C and the lower surface 51A of the back cushion 512 in the upright state, and the back surface (rear surface) 51D opposite to the backrest surface. In the back heater 513, a backrest surface heat generator 513A and the footrest heat generator 513B are integrally formed as a heat generator made of heater wiring or the like. The backrest surface heat generator 513A is disposed in a range from the upper part of the front surface to the front part of the lower surface of the back cushion 512 in the vertical direction. The footrest heat generator 513B is disposed in a range from the rear part of the lower surface to the lower part of the rear surface of the back cushion 512. That is, the footrest heat generator 513B is disposed around a portion of the seat back 5 adjacent to the footrest FR (the upper surface of the extending portion 32B of the cushion material 32). The backrest surface heat generator 513A and the footrest heat generator 513B are electrically connected to each other, and power from the vehicle-mounted battery is supplied to the back heater 513 via electric connector wiring (not shown), thus heating the vicinity.

According to the configuration in Modification Example 1-1 as described above, the footrest FR is heated by the footrest heat generator 33B of the cushion heater 33, and the vicinity (upward of the front side) of the footrest FR is heated by the footrest heat generator 513B of the back heater 513. Accordingly, the feet H1 (in particular, the toes) of the occupant H seated in the rear seat 8 can be effectively warmed. By including the backrest surface heat generator 513A and the footrest heat generator 513B in the common back heater 513, both the backrest surface 51C of the main body portion 51 of the seat back 5, and the footrest FR and therearound can be heated by a simple configuration.

### Modification Example 1-2

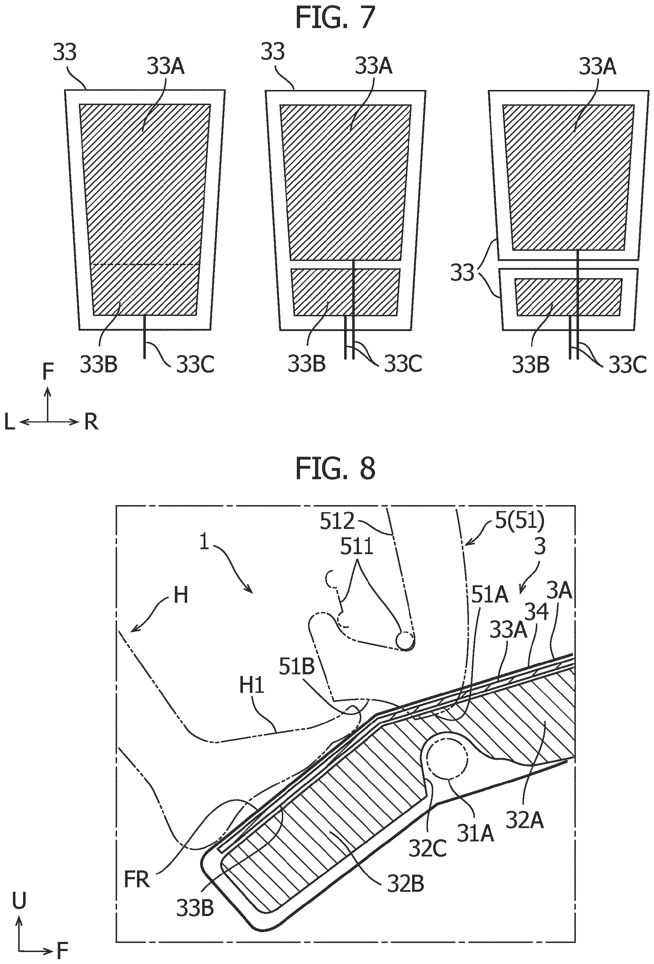

Figure 7 is a plan view showing the configuration of the cushion heater 33 according to Modification Example 1-2.

In the aforementioned first embodiment, as shown in the left part of Figure 7, an example in which the sitting surface heat generator 33A and the footrest heat generator 33B are integrally formed in the cushion heater 33 (heat generating portion) is described. In addition, in Modification Example 1-2, as shown in the center or right part of Figure 7, the sitting surface heat generator 33A and the footrest heat generator 33B are provided as electric circuits independent of each other. The individual electric circuits are formed in the common cushion heater 33 (center of Figure 7), or respectively formed in separated cushion heaters 33 (right of Figure 7).

Provided that the sitting surface heat generator 33A and the footrest heat generator 33B are electric circuits independent of each other as in Modification Example 1-2 described above, when it is determined that no occupant is seated in the front seat based on information from a vehicle-mounted sensor or the like, power can be supplied only to the footrest heat generator 33B, and only the footrest FR can be heated, and the power consumption of the vehicle-mounted battery can be reduced.

### Modification Example 1-3

Figure 8 is a sectional view of a footrest FR and therearound in Modification Example 1-3 in an enlarged scale.

In the aforementioned first embodiment, an example is described in which the extending portion 32B of the cushion material 32 is formed so that the sitting surface 3A of the seat cushion 3 and the footrest FR (the upper surface of the extending portion 32B of the cushion material 32) can be on a substantially identical plane (Figure 3). In addition, in Modification Example 1-3, as shown in Figure 8, the extending portion 32B of the cushion material 32 is formed so that the footrest FR has an angle from the sitting surface 3A of the seat cushion 3. The angle of the footrest FR from the sitting surface 3A may be fixed or be adjustable.

By making the footrest FR have the angle as in Modification Example 1-3 described above, the occupant H in the rear seat 8 can easily place the feet H1 on the footrest FR. In particular, in the case in which the angle of the footrest FR is adjustable, the footrest FR can be moved to a position causing no interference when the footrest FR is not used. Accordingly, the foot space for the rear seat 8 is effectively usable.

### Modification Example 1-4

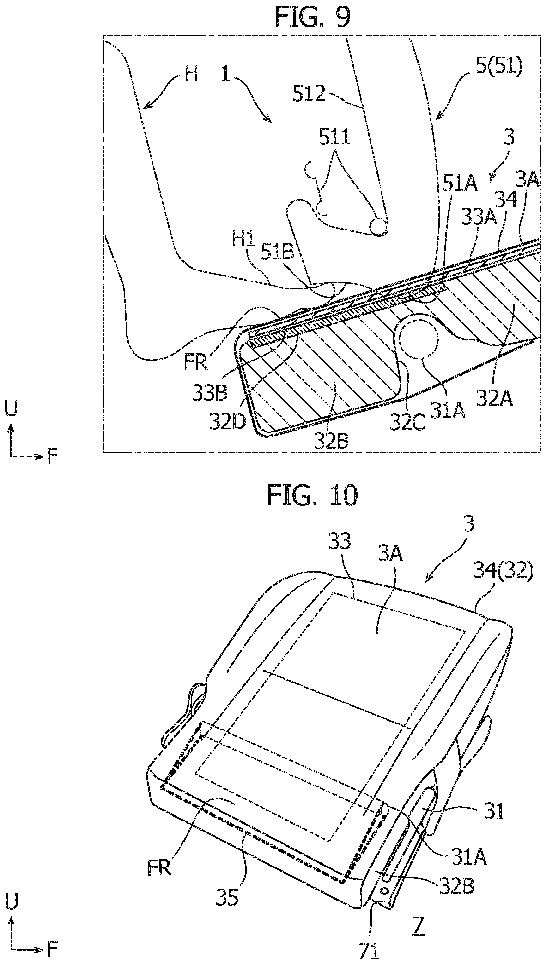

Figure 9 is a sectional view of a footrest FR and therearound in Modification Example 1-4 in an enlarged scale.

In Modification Example 1-4 shown in Figure 9, to secure the rigidity of the footrest FR of the seat cushion 3, a reinforcement 32D is provided in a range from the upper part of the rear end of the sitting portion 32A of the cushion material 32 to the upper part of the rear end of the extending portion 32B. For example, a felt mat or the like may be used as the reinforcement 32D. The lower surface 51A of the main body portion 51 of the seat back 5 is pressed against the upper surface of the front part of the reinforcement 32D, via the cushion heater 33 and the cushion cover 34.

By providing the reinforcement 32D for the cushion material 32 as in Modification Example 1-4 described above, the rigidity of the footrest FR is improved. Accordingly, the contact state between the feet H1 of the occupant H placed on the footrest FR and this footrest FR can be more stably held. By the reinforcement 32D, heat from the footrest heat generator 33B of the cushion heater 33 is made resistant to being dissipated downward of the cushion material 32. Accordingly, the feet H1 of the occupant H can be more effectively warmed.

### Modification Example 1-5

Figure 10 is a perspective view showing a schematic configuration of a seat cushion 3 according to Modification Example 1-5.

In Modification Example 1-5 shown in Figure 10, as another example for securing the rigidity of the footrest FR of the seat cushion 3, a structural member 35 (thick broken lines in Figure 10) is provided in the extending portion 32B of the cushion material 32 of the seat cushion 3.

The structural member 35 is formed of, for example, a pipe frame, a sheet-metal member or the like. The structural member 35 extends in the left-right direction (seat width direction) in the extending portion 32B. The opposite ends in the longitudinal direction extend forward, and are coupled to the cross frame 31A of the cushion frame 31 and the like. Thus, the extending portion 32B of the cushion material 32 is formed so as to cover the structural member 35.

By providing the structural member 35 as described above in the extending portion 32B, the footrest FR having a high rigidity can be achieved. Accordingly, the contact state between the feet H1 of the occupant H placed on the footrest FR and this footrest FR can be more stably held.

### Modification Example 1-6

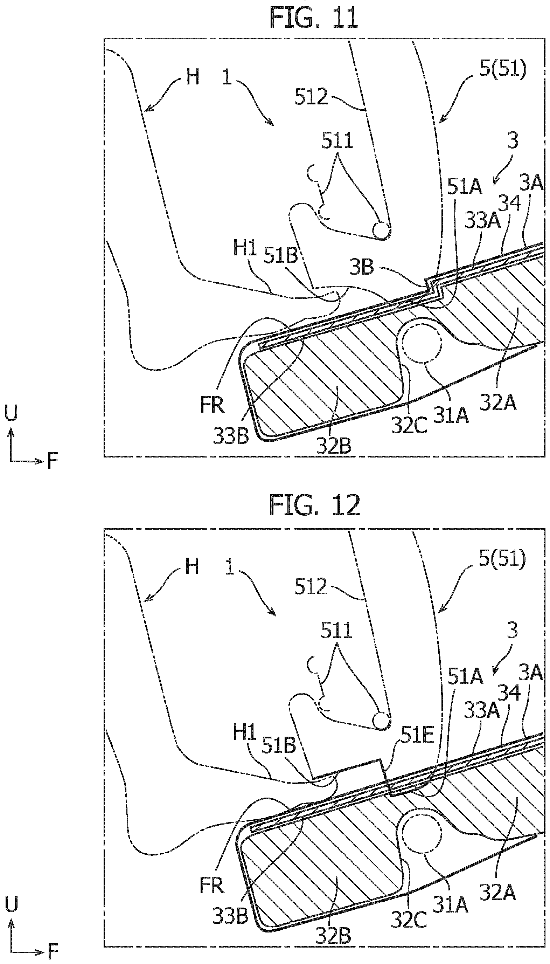

Figure 11 is a sectional view of a footrest FR and therearound in Modification Example 1-6 in an enlarged scale.

In the first embodiment described above, a situation may occur in which the feet H1 of the occupant H in the rear seat protrude through the pressed contact site between the lower surface 51A of the main body portion 51 of the seat back 5 and the seat cushion 3, and come into contact with an occupant in the front seat. To avoid occurrence of such a situation, in Modification Example 1-6 shown in Figure 11, a step 3B is provided for the seat cushion 3.

For the step 3B, a step shape is formed at the upper part of the rear end of the sitting portion 32A of the cushion material 32 of the seat cushion 3, the shape connecting the rear end of the front upper surface to the front end of the rear upper surface positioned below the front upper surface. The cushion heater 33 and the cushion cover 34 are overlaid along the step shape. The step 3B extends in the left-right direction (seat width direction). The front end of the lower surface 51A of the main body portion 51 of the seat back 5 in the upright state is pressed against the step 3B of the seat cushion 3.

According to Modification Example 1-6 as described above, when the occupant H in the rear seat 8 places the feet H1 on the footrest FR disposed forward, forward movement of the feet H1 is prevented by the step 3B of the seat cushion 3. Accordingly, the feet H1 placed on the footrest FR can be avoided from coming into contact with the occupant in the front seat, while keeping the area and the cushioning properties of the sitting surface 3A of the seat cushion 3 of the front seat in a desired state.

### Modification Example 1-7

Figure 12 is a sectional view of a footrest FR and therearound in Modification Example 1-7 in an enlarged scale.

According to Modification Example 1-7 shown in Figure 12, a step 51E is provided for the seat back 5 so as to prevent the feet H1 placed on the footrest FR from coming into contact with the occupant in the front seat.

For the step shape S1E, a step shape is formed at the lower end of the back cushion 512 of the main body portion 51 of the seat back 5, the shape connecting the rear end of the front lower surface to the front end of the rear lower surface positioned above the front lower surface. The back cover (not shown) is overlaid so as to be along the step shape. The step 51E extends in the left-right direction (seat width direction). The step surface of the step S1E, and the rear lower surface form the clearance 51B, together with the upper surface of the seat back 5. The front lower surface of the step 51E is pressed against the upper surface of the seat back 5.

According to Modification Example 1-7 as described above, when the occupant H in the rear seat 8 places the feet H1 on the footrest FR disposed forward, forward movement of the feet H1 is prevented by the step 51E of the main body portion 51 of the seat back 5, thus exerting advantageous effects similar to those in Modification Example 1-6 described above.

### Second Embodiment

Next, a second embodiment of the present invention will be described.

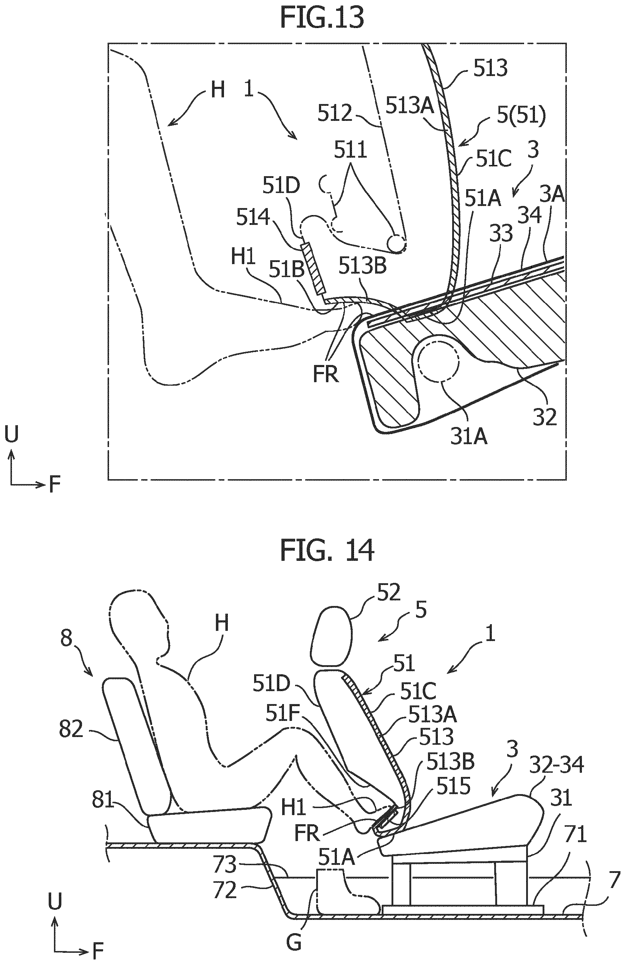

Figure 13 is a sectional view showing the footrest FR of the vehicle seat 1 and therearound according to the second embodiment in an enlarged scale. In Figure 13, the configuration of the vehicle seat 1 according to the second embodiment is different from that of the first embodiment described above in that the extending portion 32B of the cushion material 32 of the seat cushion 3 is not formed, an improvement for allowing the feet H1 of the occupant H to be easily inserted into a clearance between the upper part of the rear end of the seat cushion 3 and the rear part of the lower end of the seat back 5 is applied to the main body portion 51 of the seat back 5, and the clearance is thus allowed to serve as the footrest FR, and the footrest FR is heated using the cushion heater 33 and the back heater 513. The configuration, except for the difference described above, is the same as the configuration of the aforementioned first embodiment. Accordingly, corresponding portions are assigned the same symbols, and description thereof is omitted.

On the lower surface of an existing seat back, a resin member for fixing a back cover is provided in some cases. In this case, it is difficult to insert feet into the clearance between the seat cushion and the seat back. Accordingly, in the second embodiment, a resin member 514 for fixing the back cover is attached to the lower part of the back surface (rear surface) 51D of the main body portion 51 of the seat back 5 opposite to the backrest surface (front surface) 51C (Figure 13). Thus, the lower surface 51A of the main body portion 51 of the seat back 5 includes a soft surface having the same degree of elastic properties as the back cushion 512.

Similar to the case in the first embodiment described above, the rear portion of the lower surface 51A of the main body portion 51 of the seat back 5 has a shape curved upward toward the rear, and is formed with the clearance 51B that is open rearward between the lower surface 51A and the upper surface of the seat cushion 3. The clearance 51B is formed of the soft surface as described above. Accordingly, when the feet H1 are inserted, the clearance 51B is displaced, which allows the feet H1 to be easily inserted all the way into the clearance 51B. Through use of such properties of the lower surface 51A of the main body portion 51 of the seat back 5, in the vehicle seat 1 according to the second embodiment, the footrest FR is formed in the clearance 51B.

In the vehicle seat 1 according to the second embodiment, the back heater 513 is provided between the back cushion 512 and the back cover (not shown). The back heater 513 is spread so as to continuously cover the front surface of the back cushion 512 that forms the backrest surface 51C of the main body portion 51, and the lower surface of the back cushion 512 that forms the lower surface 51A of the main body portion 51 and the clearance 51B. In the back heater 513, the backrest surface heat generator 513A and the footrest heat generator 513B are integrally or independently formed as heat generators made of heater wiring or the like. The backrest surface heat generator 513A is disposed in a range from the upper part of the front surface to the front part of the lower surface of the back cushion 512 in the vertical direction. The footrest heat generator 513B is disposed at the rear part of the lower surface of the back cushion 512. The backrest surface heat generator 513A and the footrest heat generator 513B are supplied with power from the vehicle-mounted battery via electric connector wiring (not shown), thus heating the vicinity.

In the cushion heater 33 provided for the seat cushion 3, the internal heat generator extends to the rear end part of the cushion material 32 that corresponds to the clearance 5 1B. That is, the heat generators for heating the footrest FR in the second embodiment are disposed at portions of the seat cushion 3 and the seat back 5 around the clearance 51B. Accordingly, in the second embodiment, the feet H1 inserted in the footrest FR are warmed from both the upper and lower directions. Consequently, in the second embodiment, the cushion heater 33 and the back heater 513 correspond to "heat generating portion" of the present invention. Note that the heat generator that heats the footrest FR is only required to be at either the seat back 5 or the seat cushion 3.

The vehicle seat 1 in the second embodiment as described above can also provide the same effects as those of first embodiment and Modification Example 1-1 described above. The shapes of the back cushion 512 and the cushion material 32 in the second embodiment are respective shapes basically similar to existing ones. Accordingly, the vehicle seat 1 that has a function of heating the feet H1 can be achieved at a low cost. Furthermore, in the vehicle seat 1 according to the first embodiment, a restriction about the foot space for the rear seat can occur due to the extending portion 32B of the seat cushion 3. However, the vehicle seat 1 according to the second embodiment has an advantage of not causing such a restriction.

### Third Embodiment

Next, a third embodiment of the present invention will be described.

Figure 14 is a side sectional view showing a main configuration of a vehicle seat 1 according to the third embodiment. In Figure 14, the configuration of the vehicle seat 1 according to the third embodiment differs greatly from that in the cases of the first and second embodiments described above in that the footrest FR is formed on the back surface 51D opposite to the backrest surface 51C of the main body portion 51 of the seat back 5.

Specifically, the back surface 51D of the main body portion 51 of the seat back 5 has a recessed portion 51F that is recessed toward the backrest surface 51C. The recessed portion 51F includes a lower inclined surface that extends upward toward the front from the lower part of the back surface 51D, and an upper inclined surface that extends rearward toward above from the upper end of the lower inclined surface. The lower inclined surface and the upper inclined surface are exposed rearward of the seat back 5, and has a shape that allows the occupant H seated in the rear seat 8 to easily bring the feet H1 into contact with the lower inclined surface of the recessed portion 51F as shown in Figure 14. That is, according to the third embodiment, the footrest FR is formed in the recessed portion 51F in the back surface 51D of the main body portion 51 of the seat back 5. Part of an air passage provided in an existing seat back for airflow can be used as the recessed portion 51F.

In the vehicle seat 1 according to the third embodiment, the back heater 513 is provided between the back cushion and the back cover (not shown). The back heater 513 is spread so as to continuously cover the front surface of the back cushion that forms the backrest surface 51C of the main body portion 51, the lower surface of the back cushion that forms the lower surface 51A of the main body portion 51, and the rear surface of the back cushion that forms the lower inclined surface of the recessed portion 51F in the back surface 51D of the main body portion 51. In the back heater 513, the backrest surface heat generator 513A and the footrest heat generator 513B are integrally or independently formed as heat generators made of heater wiring or the like. The backrest surface heat generator 513A is disposed in a range from the upper part of the front surface to the front part of the lower surface of the back cushion in the vertical direction. The footrest heat generator 513B is disposed on the rear surface of the back cushion corresponding to the lower inclined surface of the recessed portion 51F. The backrest surface heat generator 513A and the footrest heat generator 513B are supplied with power from the vehicle-mounted battery via electric connector wiring (not shown), thus heating the vicinity. Note that in the third embodiment, the back heater 513 corresponds to "heat generating portion" in the present invention.

Furthermore, in the vehicle seat 1 according to the third embodiment, a plate-shaped member 515 formed of a resin or the like is provided on the rear side (toward the front of the seat) of the footrest heat generator 513B. The plate-shaped member 515 is fixed to the back frame 511 or the like of the main body portion 51. The recessed portion 51F is provided in the main body portion 51 of the seat back 5, which reduces the thickness of the main body portion 51, and possibly depress downward a portion of the recessed portion 51F that is in contact with the soles of the occupant. The plate-shaped member 515 prevents the recessed portion 51F from being deformed downward. Note that in a case in which the thermal conductivity of the plate-shaped member 515 is high, the plate-shaped member 515 may be disposed on the toe side of the footrest heat generator 513B. The plate-shaped member 515 can be omitted.

Such a vehicle seat 1 in the third embodiment can also provide the same effects as those of the second embodiment described above. The footrest FR in the third embodiment can easily and securely have a wider area in comparison with the case of the second embodiment. Accordingly, the feet H1 of the occupant H can be warmed in a wide range.

### Modification Example 3-1

Here, various modification examples related to the aforementioned third embodiment described above will be described.

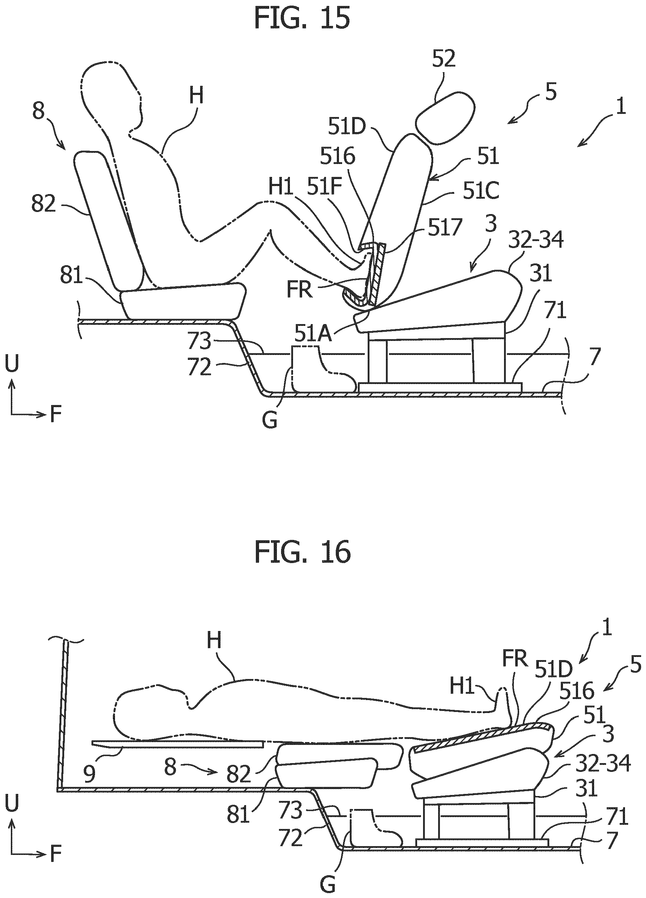

Figure 15 is a side sectional view showing a main configuration according to Modification Example 3-1.

In the aforementioned third embodiment, an example in which the recessed portion 51F formed in the back surface 51D of the main body portion 51 of the seat back 5 includes the lower inclined surface and the upper inclined surface is described. In addition, in Modification Example 3-1, as shown in Figure 15, the recessed portion 51F has a shape recessed toward the backrest surface 51C in a door-pocket-shaped manner.

Specifically, the door-pocket-shaped recessed portion 51F formed in the back surface 51D of the main body portion 51 of the seat back 5 includes a lower surface that extends forward from the lower part of the back surface 51D, a front surface that extends upward from the front end of the lower surface, and an upper surface that extends rearward from the upper end of the front surface. The width of the recessed portion 51F in the front-rear direction is smaller at the upper portion than at the lower portion. In a state in which the seat back 5 is appropriately tilted forward, the lower surface and most of the front surface of the recessed portion 51F is exposed rearward of the seat back 5, and as shown in Figure 15, and a shape is achieved that allows the occupant H seated in the rear seat 8 to easily bring the feet H1 in contact with the lower surface and the front surface of the recessed portion S1F.

In Modification Example 3-1, a back surface heater 516 is provided around the recessed portion 51F in the back surface 51D of the main body portion 51 of the seat back 5. A heat generator that is made of heater wiring or the like and is formed in the back surface heater 516 is disposed on, for example, the lower surface, front surface, and upper surface of the recessed portion 51F. The heat generator of the back surface heater 516 is supplied with power from the vehicle-mounted battery via electric connector wiring (not shown), thus heating the vicinity. Note that the heat generator of the back surface heater 516 provided around the recessed portion 51F may be disposed at least at the upper part of the front surface and on the upper surface of the recessed portion 51F. In a case in which a back heater for heating the backrest surface 51C is provided for the main body portion 51 of the seat back 5, the back surface heater 516 may be integrally formed with the back heater in a continuous manner. In Modification Example 3-1, the back surface heater 516 corresponds to "heat generating portion" in the present invention.

Furthermore, in Modification Example 3-1, a plate-shaped member 517 formed of a resin or the like is provided on the back (toward the front of the seat) of a portion of the back surface heater 516 that corresponds to the front surface of the recessed portion 51F. The plate-shaped member 517 is fixed to the back frame 511 or the like of the main body portion 51 of the seat back 5. The plate-shaped member 517 regulates forward displacement when the front surface of the recessed portion 51F is pressed by the soles of the occupant. Note that the plate-shaped member 517 can be omitted.

In Modification Example 3-1 as described above, in addition to the working-effects in the case of the aforementioned third embodiment, the heat generator of the back surface heater 516 is disposed at the upper part of the front surface and on the upper surface of the door-pocket-shaped recessed portion 51F, thus allowing the soles and toes of the feet H1 of the occupant H to be efficiently warmed. The heat generator of the back surface heater 516 is disposed also at the lower part of the front surface and the lower surface of the door-pocket-shaped recessed portion 51F, thus allowing the entire feet H1 including the heels to be warmed.

### Modification Example 3-2

Figure 16 is a side sectional view showing a main configuration according to Modification Example 3-2.

In Modification Example 3-2 shown in Figure 16, the recessed portion 51F is not provided on the back surface 51D of the main body portion 51 of the seat back 5 in the front vehicle seat 1, but the back surface heater 516 is provided in a range from the upper end to the lower end of the back surface 51D of the main body portion 51 of the seat back 5 in the upright state. The back surface heater 516 is configured so that power is supplied from the vehicle-mounted battery, and the entire heater can generate heat, or the upper portion and the lower portion of the heater can individually generate heat. In an example in Figure 16, the seat cushion 81 of the rear seat 8 is positioned forward from the upper end portion of the floor kick-up portion 72, and the goods G, such as shoes, can be moved below the seat cushion 81. However, the front and rear dimension of the rear seat 8 is reduced due to this positioning.

In a case in which the back surface heater 516 of the seat back 5 is used in Modification Example 3-2 as described above, the seat back 5 of the front vehicle seat 1, and the seat back 82 of the rear seat 8 are inclined forward, and a multi-board 9 or the like is installed in a luggage space rearward of the rear seat 8, thus forming a substantially flat floor surface in the cabin. Note that in the example in Figure 16, the headrest 52 of the front seat back 5 is taken off from the main body portion 51. The occupant H lies on the floor surface with the head being positioned rearward in the cabin, and the back surface heater 516 is operated, thus allowing the feet H1 and the legs to be warmed. Although not shown, when lying on the floor surface with the head positioned forward in the cabin, the back can be warmed. Furthermore, if a heat generating portion is provided also on the back surface of the rear seat back 82 of the rear seat 8 in the example in Figure 16, the back surface of the seat back 82 is heated by the heat generating portion. Accordingly, buttocks of the occupant and therearound can also be warmed, and the entire back of the lower body can be warmed.

### Modification Example 3-3

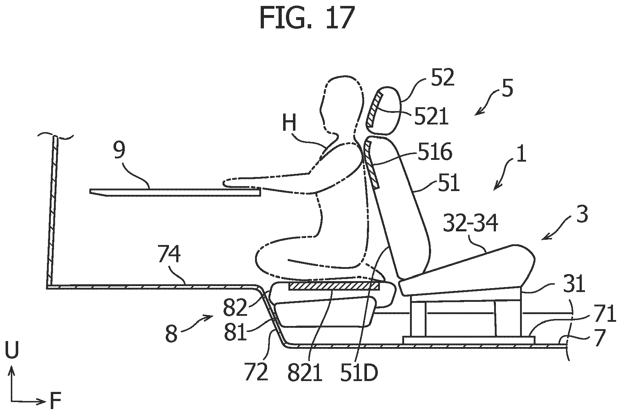

Figure 17 is a side sectional view showing a main configuration according to Modification Example 3-3.

In Modification Example 3-3 shown in Figure 17, the recessed portion 51F is not provided on the back surface 51D of the main body portion 51 of the seat back 5 in the front vehicle seat 1, but the back surface heater 516 is provided at the upper part of the back surface 51D of the main body portion 51 of the seat back 5 in the upright state, and a back surface heater 521 is provided on the back surface (rear surface) of the headrest 52. A back surface heater 821 is provided also on the back surface of each of the seat backs 82 of the rear seats 8. Furthermore, in the example in Figure 17, a structure is adopted in which the rear seat 8 can be tilted down separately at the left and right and be stored in the foot space.

In a case of using each of the back surface heaters 516, 521, and 821 in Modification Example 3-3 as described above, they are tilted down together with the seat cushion 81 in a state in which one seat back 82 of one of the left and right rear seats 8 is tilted forward, and a substantially flat floor surface is formed at a rear part in the cabin using the back surface of the seat back 82, a rear floor panel 74 disposed rearward and the like. In this case, the other of the left and right rear seats 8 is not tilted down. Accordingly, goods, such as shoes, can be placed in the foot space at the other rear seat 8. The multi-board 9 is installed in the luggage space rearward of the rear seat 8, thus forming a workbench. The occupant H sits on their heels on the floor surface as shown in Figure 17, and each of the back surface heaters 516, 521, and 821 is operated, which can warm the feet, legs, and back and head while working on the workbench.

Although the first to third embodiments of the present invention and their related modification examples are described above, the present invention is not limited to the aforementioned embodiments and modification examples, they can be modified and changed in various manners based on the technical concept of the present invention.

### [Reference Signs List]

- 1: Vehicle seat
- 3: Seat cushion
- 3A: Sitting surface
- 31: Cushion frame
- 32: Cushion material
- 32A: Sitting portion
- 32B: Extending portion
- 33: Cushion heater (heat generating portion)
- 33A: Sitting surface heat generator
- 33B: Footrest heat generator
- 33C: Electric connector wiring
- 34: Cushion cover
- 5: Seat back
- 51: Main body portion
- 51A: Lower surface
- 51B: Clearance
- 51C: Backrest surface
- 51D: Back surface
- 511: Back frame
- 512: Back cushion
- 513: Back heater (heat generating portion)
- 513A: Backrest surface heat generator
- 513B: Footrest heat generator
- 516, 521, 821: Back surface heater (heat generating portion)
- 52: Headrest
- 7: Vehicle floor
- 8: Rear seat
- FR: Footrest portion
- G: Goods
- H: Occupant
- H1: Foot

## Claims

1. A vehicle seat comprising:
a seat cushion on which an occupant is to be seated; and
a seat back that is disposed upward from a rear part of the seat cushion, and supports an upper body of the occupant seated in the seat cushion, **characterized in that** the vehicle seat further comprises:
a footrest that is formed at at least one of the seat cushion and the seat back, and is configured to allow feet of an occupant positioned behind the seat cushion to be placed; and
a heat generating portion that heats the footrest and/or therearound.

2. The vehicle seat according to claim 1,
wherein the seat cushion includes an extending portion configured to be capable of extending rearward beyond a lower surface of the seat back in an upright state, and
the footrest is formed on an upper surface of the extending portion.

3. The vehicle seat according to claim 2,
wherein the extending portion is disposed at a distance upward from a vehicle floor.

4. The vehicle seat according to claim 2,
wherein the heat generating portion includes a footrest heat generator disposed around the upper surface of the extending portion of the seat cushion and/or around a vicinity of the extending portion of the seat back.

5. The vehicle seat according to claim 2,
wherein the heat generating portion includes:
a footrest heat generator disposed around the upper surface of the extending portion of the seat cushion; and
a sitting surface heat generator disposed around a sitting surface of the seat cushion.

6. The vehicle seat according to claim 2,
wherein the heat generating portion includes:
a footrest heat generator disposed around a vicinity of the extending portion in the seat back; and
a backrest surface heat generator disposed around a backrest surface of the seat back.

7. The vehicle seat according to claim 1,
wherein a clearance openable rearward is formed by an upper surface of a rear end part of the seat cushion, and a lower surface of the seat back in an upright state, and
the footrest is formed in the clearance.

8. The vehicle seat according to claim 7,
wherein the heat generating portion includes a footrest heat generator disposed around the clearance between the seat cushion and the seat back.

9. The vehicle seat according to claim 1,
wherein the footrest is formed on a back surface opposite to a backrest surface in the seat back.

10. The vehicle seat according to claim 9,
wherein the back surface has a recessed portion that is recessed toward the backrest surface,
the footrest is formed in the recessed portion, and
the heat generating portion includes a footrest heat generator installed around the recessed portion of the seat back.
